# EUROPÄISCHE PATENTSCHRIFT

(11) **EP 2 336 199 B1**
(45) Veröffentlichungstag und Bekanntmachung des Hinweises auf die Patenterteilung: **04.04.2018**
(21) Anmeldenummer: 10195556.5
(22) Anmeldetag: 17.12.2010
(51) Int. Cl.: C08F 8/28

(54) **POLYVINYLACETAL MIT HOHER FLIESSFÄHIGKEIT UND HIERMIT HERGESTELLTE WEICHMACHERHALTIGE FOLIE**
POLYVINYLACETAL WITH HIGH FLOWING CAPABILITY AND FILM CONTAINING SOFTENERS PRODUCED USING SAME
POLY-ACÉTATE DE VINYLE AYANT UNE FLUIDITÉ SUPÉRIEURE ET FEUILLE CONTENANT DU PLASTIFIANT AINSI FABRIQUÉE

(30) Priorität: 18.12.2009 EP 09179814
(43) Veröffentlichungstag der Anmeldung: 22.06.2011
(73) Patentinhaber: Kuraray Europe GmbH, 65795 Hattersheim (DE)
(72) Erfinder: Steuer, Martin, Dr, 65835 Liederbach (DE); Katayama, Masako, Kurashiki Okayama 710-8691 (JP)
(74) Vertreter: Kisters, Michael Marcus

(56) Entgegenhaltungen:
- GB-A- 2 007 677
- US-A- 4 970 253

## Beschreibung

### Technisches Gebiet

Die Erfindung betrifft Polyvinylacetale mit hoher Fließfähigkeit, ein Verfahren zu deren Herstellung sowie die Verwendung in weichmacherhaltigen Folien.

### Stand der Technik

Polyvinylacetale, insbesondere Polyvinylbutyral sind seit langem als Grundstoff zur Herstellung von Zwischenschichtfolien für Verbundsicherheitsgläser im Architektur- und Automobilbau sowie als Klebefolie für Photovoltaikmodule bekannt.

Polyvinylacetale und deren Folgeprodukte sind großtechnisch hergestellte Materialien, die im Laufe der Zeit vielen unterschiedlichen Anwendungsprofilen angepasst werden mussten. In diesem Zusammenhang wurde der molekulare Aufbau der Polymerkette in Bezug auf die Zusammensetzung (Acetalisierungsgrad, Restacetatgehalt und Restalkoholgehalt), Kettenlänge, verwendeter Aldehyd und die Kompatibilität mit unterschiedlichen Weichmachern untersucht. Diese Untersuchungen haben häufig nur das Polyvinylacetal an sich, nicht aber die Verarbeitbarkeit bzw. die Einstellung von bestimmten Eigenschaften der Folgeprodukte zum Gegenstand.

Ein anderer Aspekt bei der Untersuchung von Polyvinylacetalen ergibt sich aus deren Verarbeitbarkeit zu weichmacherhaltigen Folien und wiederum deren weitere Verarbeitung. Weichmacherhaltige Folien auf Basis von Polyvinylbutyral werden in der Regel bei erhöhter Temperatur und erhöhtem/erniedrigten Druck mit Glas oder anderen Kunststoffen zur entsprechenden Laminaten verarbeitet. Insbesondere im Automobilbau oder bei der Herstellung von Photovoltaikmodulen sind die zusammenzufügenden Laminatbestandteile nicht planar bzw. besitzen eine konstante Dicke, sondern es müssen z.B. elektrische Zuleitungen, Solarzellen, Sensoren oder Heizdrähte einlaminiert werden. Dies setzt voraus, dass die weichmacherhaltige Folie bei den üblichen Laminiertemperaturen eine ausreichende Fließfähigkeit aufweist, so dass Unebenheiten oder Störstellen blasen- und schlierenfrei umschlossen bzw. verkapselt werden.

Eine mangelnde Fließfähigkeit von Folien kann in gewissen Grenzen durch Anheben der Verarbeitungstemperaturen oder Verlängerung der Verarbeitungszeiten ausgeglichen werden. In industriellen Prozessen ist aber die Erhöhung der Verarbeitungstemperatur und/oder die Verlängerung der Maschinentaktzeiten unerwünscht, da hierdurch die Energieeffizienz oder die Auslastung der Fabrikationsanlagen sinkt.

Zur Verbesserung der Fliessfähigkeit könnte auch der Weichmachergehalt der Folie angehoben werden. Dies ist aber aus Gründen der Kompatibilität mit dem jeweiligen Polyvinylacetal nicht immer möglich und führt in der Regel auch zu einer erhöhten Eigenklebrigkeit der Folie. Dies vermindert deren Verarbeitbarkeit und ist generell unerwünscht.

Die Herstellung von Polyvinylacetalen mit verbesserter Fließfähigkeit ist in GB 2007677 bekannt. Bei den hier beschriebenen Verfahren wird die saure Reaktionsmischung bei Erreichen der Endtemperatur mit Hilfe von Basen neutralisiert. Damit wird die Sequenz der Wiederholungseinheiten im Polyvinylacetal ((Alkohol-, Acetal und Acetatgruppen) eingefroren und wird nicht auf das thermodynamische Gleichgewichts bei der Endtemperatur eingestellt. Weiterhin werden hier in der Acetalisierungsreaktion Emulgatoren eingesetzt die die Reaktion und die Sequenz der Wiederholungseinheiten im Polyvinylacetal beeinflussen. Weiterhin verbessert sich die Fließfähigkeit der in GB 2007677 beschriebenen Polyvinylacetale mit steigenden Acetalisierungsgrad (Butylaledehydeinwwaage), was für den erhalt von hochacetaltiserten Polyvinylacetalen mit einem Acetalsiereungsgrad über 75 Mol % negativ ist.

Die Herstellung von Polyvinylacetalen mit verbesserter Fliessfähigkeit ist auch in US 4970245 beschrieben. Hier wird allerdings bei einer niedrigen Acetalisierungstemperatur gearbeitet, sodass die Sequenz der Wiederholungseinheiten im Polyvinylacetal nicht auf das thermodynamische Gleichgewicht eingestellt wird. Weiterhin werden auch hier Emulgatoren verwendet

### Aufgabe

Aufgabe der vorliegenden Erfindung war es daher, Polyvinylacetale bzw. hieraus hergestellte weichmacherhaltige Folien mit einer verbesserten Fließfähigkeit bereitzustellen.

Überraschenderweise wurde gefunden, dass die rheologischen Eigenschaften von Polyvinylacetal bzw. hieraus hergestellten weichmacherhaltigen Folien über die Sekundärstruktur der Polymerkette eingestellt werden können. Dies kann in einfacher Weise durch C-NMR-Messungen untersucht werden.

### Beschreibung der Erfindung

Gegenstand der vorliegenden Erfindung sind daher Polyvinylacetale erhältlich durch Reaktion von mindesten einem Polyvinylalkohol mit mindestens einem Aldehyd zu einem Acetalisierungsgrad der Polyvinylalkohole von mindestens 75 Mol.%, gekennzeichnet durch eine OH-Blockiness des Polyvinylacetals, definiert als Quotient aus der Anzahl der Methylengruppen von zwei benachbarten Alkoholsequenzen (VV) und der Summe der Anzahl der Methylengruppen aus benachbarten Alkohol/Acetalsequenzen und Acetal/Acetalsequenzen (VB + BB), von mehr als 0,151.

Ein weiterer Gegenstand der Erfindung ist ein Verfahren zur Herstellung von Polyvinylacetalen mit der genannten OH-Blockiness und Acetalsisierungsgrad durch säurekatalysierte Reaktion von mindestens einem Polyvinylalkohol mit mindestens einem Aldehyd, gekennzeichnet durch die Verfahrensschritte
a) Umsetzen des Polyvinylalkohols mit dem Aldehyd bei einer Temperatur von 0 bis 20 °C
b) Vervollständigen der Reaktion aus a) durch Erwärmen der Reaktionsmischung auf 68 bis 90 °C,
c) Abkühlen der Reaktionsmischung auf 15 bis 25 °C und Abtrennen des ausgefallenen Polyvinylacetals
d) Neutralisation des von der Reaktionsmischung abgetrennten Polyvinylacetals.

Die im Rahmen dieser Erfindung betrachteten Methylengruppen VV, VB und BB sind in dem nachfolgenden Formelausschnitt einer Polyvinylbutyralkette dargestellt:

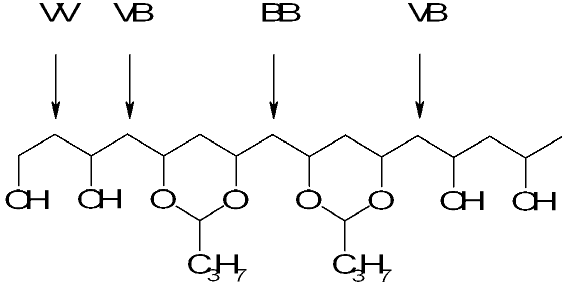

Die OH-Blockiness der erfindungsgemäßen Polyvinylacetale errechnet sich aus dem Quotienten VV/(VB + BB) und kann wie im Folgenden gezeigt durch ¹³C-NMR-Messungen ermittelt werden.

Erfindungsgemäße Polyvinylacetale sind durch Reaktion von mindestens einem Polyvinylalkohol mit mindestens einem Aldehyd unter Säurekatalyse erhältlich. Diese Reaktion ist dem Fachmann im Prinzip bekannt und kann z.B. WO 2009/132987 A1 oder EP 09175666.8 entnommen werden.

Üblicherweise wird bei der Herstellung von Polyvinylacetalen zunächst mindestens ein Polyvinylalkohol unter Erwärmen in Wasser gelöst und im Reaktionsgefäß bei einer Temperatur von ca. 5 bis 20 °C vorgelegt. Hierzu werden in der ersten Verfahrensvariante eine Säure (HCl, HNO₃ oder H₂ SO₄ oder in einer weiteren Variante ein oder mehrere Aldehyde mit 2 bis 10 Kohlenstoffatomen (z.B. Acetaldehyd und/oder Butyraldehyd zugegeben. Als Aldehyd wird bevorzugt Butyraldehyd unter Erhalt von Polyvinylbutyral eingesetzt.

Bevorzugt wird das erfindungsgemäße Verfahren in Abwesenheit von Emulgatoren oder Tesiden wie Sulfonsäuresalze wie das im Stand der Technik häufig eingesetzte Natriumsalz der Dodecylsulfonsäure durchgeführt.

Je nach Verfahrensvariante wird bei der genannten Temperatur zur Polyvinylalkohol/Säuremischung mindestens ein Aldehyd oder zur Polyvinylalkohol/Aldehydmischung eine Säure zugegeben. Das entstehende Polyvinylacetal fällt während oder nach Ende der Zugabe aus. Die Zugabe der Säure bzw. des Aldehyds in Verfahrensschritt a) kann in verschiedenen Dosierzeiten und/oder mit einer Dosierpause erfolgen.

Zur Vervollständigung der Reaktion wird die Reaktionsmischung in Verfahrensschritt b) bevorzugt auf 68 bis 80 °C erhitzt und bei dieser Temperatur eine gewisse Zeit gehalten. Bei dieser so genannten Heißmodifizierung können neben einer Vervollständigung der Acetalisierungsreaktion auch intramolekulare Umacetalisierungen unter Ausbildung von Acetal- und Alkoholdomänen stattfinden.

Es wird vermutet, dass das Fließverhalten von Polyvinylacetal in hohem Maß von der Ausbildung von Vinylalkohol-Domänen abhängt. Dies kann besonders gut durch ¹³C-NMR-Untersuchungen, wie in den Messmethoden beschrieben, ermittelt werden.

Die Domänenbildung von Vinylalkoholgruppen wird im Rahmen der vorliegenden Erfindung durch die "OH-Blockiness", ermittelt über¹³ C-NMR-Messungen, beschrieben. Die OH-Blockiness von erfindungsgemäßem Polyvinylacetal ist größer als 0,151, bevorzugt größer als 0,16, besonders bevorzugt größer als 0,17 und insbesondere größer als 0,18, jeweils mit einer Obergrenze für die OH-Blockiness von 0,3.

Die Fließfähigkeit von erfindungsgemäßem Polyvinylacetal kann zusätzlich auch über dessen Lösungsviskosität in einer 5 Gew.% Lösung in Ethanol ausgedrückt werden. Diese ist bevorzugt geringer als 75 mPas und besonders bevorzugt kleiner als 70 mPas.

Bevorzugt wird das erfindungsgemäße Verfahren daher mit einer Temperatur in Verfahrensschritt b) von mindestens 68°C, insbesondere von mehr als 72 °C, jeweils mit einer Obergrenze von 90 °C oder 80 °C durchgeführt. Unabhängig hiervon kann die Temperatur in Verfahrensschritt b) über einen Zeitraum von mindestens 60 min, bevorzugt von mindestens 80 und insbesondere von mehr als 100 min. bei der betreffenden Temperatur konstant gehalten werden, jeweils mit einer Obergrenze für die Haltezeit von 600 min.

Die Acetalisierung von Polyvinylalkoholen ist eine säurekatalysierte Gleichgewichtsreaktion wobei temperaturabhängig Acetalgruppen gebildet werden und wieder zerfallen. Durch die Gleichgewichtsreaktion bildet sich ein Polyvinylacetal mit der erfindungsgemäßen Sequenz der Wiederholungseinheiten im Polyvinylacetal ((Alkohol-, Acetal und Acetatgruppen), definiert über den Quotient aus der Anzahl der Methylengruppen von zwei benachbarten Alkoholsequenzen (VV) und der Summe der Anzahl der Methylengruppen aus benachbarten Alkohol/Acetalsequenzen und Acetal/Acetalsequenzen (VB + BB), abgekürzt OH-Blockiness. Die erfindungsgemäße Sequenz wird nur bei einer zeitlich und thermisch ausreichenden Gleichgewichtsreaktion gemäß Schritt b) des erfindungsgemäßen Verfahrens erhalten.

Durch das Abkühlen der Reaktionsmischung in Schritt c) wird die in Schritt c) eingestellte Sequenz der Wiederholungseinheiten im Polyvinylacetal eingefroren und wird durch das zusätzliche Entfernen des sauren Katalysators nicht mehr verändert. Hierdurch wird das in Schritt b) erhaltene thermodynamische Gleichgewicht der Sequenz der Wiederholungseinheiten im Polyvinylacetal fixiert.

Im Schritt d) des erfindungsgemäßen Verfahrens wird das von der Reaktionsmischung abgetrennten Polyvinylacetal neutralisiert. Dies kann durch Waschen mit Wasser oder durch Zugabe von Basen wie KOH, NaOH, Mg(OH)₂ oder Epoxiden erfolgen.

Erfindungsgemäße Polyvinylacetale weisen bevorzugt einen Restacetatgehalt von 1,0 - 8 Mol%, besonders bevorzugt 1,0 bis 5,0 und insbesondere 1,0 bis 2,0 Mol% auf. Der Restacetatgehalt der erfindungsgemäßen Polyvinylacetale ist identisch zu dem der eingesetzten Polyvinylalkohole.

In einer weiteren Variante der Erfindung weisen die erfindungsgemäßen Polyvinylacetale durch Vernetzung über Carboxylgruppen, durch Polyaldehyde, Glutardialdehyd oder Glyoxylsäure ein erhöhtes Molekulargewicht und eine erhöhte Lösungsviskosität auf, die in den o.g. Grenzen liegen muss.

Vernetzte Polyvinylacetale können z.B. durch die Coacetalisierung von Polyvinylalkoholen mit Polyaldehyden, Glutardialdehyd oder Glyoxylsäure hergestellt werden. Bevorzugt reagieren durch die Vernetzung 0.001 bis 1 % der ursprünglich im Polyvinylacetal enthaltenen OH-Gruppen ab.

Geeignete Vernetzungsmöglichkeiten für Polyvinylacetale sind sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale), EP 1622946 A1 (mit Glutardialdehyd vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen. Die Vernetzung des Polyvinylacetals wird makroskopisch über ein erhöhtes Molekulargewicht sowie eine erhöhte Viskosität einer ethanolischen Lösung im Vergleich zu den unvernetzten Polyvinylacetalen wahrgenommen.

Aufgrund der verbesserten Fließfähigkeit, z.B. ausgedrückt über die Lösungsviskosität können die erfindungsgemäßen Polyvinylacetale besonders gut mit den üblichen Weichmachern zu weichmacherhaltigen Folien verarbeitet werden. Folien dieser Art eigenen sich zur Verwendung in Verbundverglasungen für den Automobil- oder Architekturbereich sowie zur Herstellung von Photovoltaikmodulen.

Die mit erfindungsgemäßen Polyvinylacetalen hergestellten Folien weisen bevorzugt einen Weichmachergehalt im Bereich von 18 bis 32 Gew.%, bevorzugt von 22 bis 28 Gew.% (jeweils bezogen auf die gesamte Formulierung) auf. Folien dieser Art können einen oder mehrere Weichmacher enthalten, die auf diesem technischen Gebiet üblich und dem Fachmann bekannt sind. Besonders bevorzugt sind eine oder mehrere Weichmacher, ausgewählt aus der Gruppe Di-2-ethylhexylsebacat, 1,2-Cyclohexandicarbonsäurediisononylester, Di-2-ethylhexyladipat, Di-2-ethylhexylphthalat, Dioctyladipat, Dihexyladipat, Dibutylsebacat, Di-2-butoxyethylsebacat, Triethylenglykol-bis-2-ethylhexanoat, Triethylenglykol-bis-n-heptanoat, Tetraethylenglykol-bis-n-heptanoat, Di-2-butoxyethyladipat, Di-2-butoxyethoxyethyladipat.

Die mit den erfindungsgemäßen Polyvinylacetalen hergestellten Folien können neben den Weichmachern Haftungsregulatoren wie die in WO 03/033583 A1 offenbaren Alkali- und/oder Erdalkalisalze von organischen Säuren enthalten. Als besonders geeignet haben sich Kaliumacetat und/oder Magnesiumacetat herausgestellt. Die Alkali- und/oder Erdalkalimetallsalze können alleine oder in Kombination in einer Menge von 0 bis 300 ppm, insbesondere 0 bis 100 ppm verwendet werden.

Die prinzipielle Herstellung von Folien auf Basis von weichmacherhaltigen Polyvinylacetalen ist industriell bekannt und z.B. in EP 185863 B1 oder EP 1118258 B1 beschrieben. Die Verarbeitung dieser Folien ist dem Fachmann ebenfalls bekannt und kann in so genannten Autoklavenprozessen bei erhöhtem Druck von 10 bis 15 bar und Temperaturen von 130 bis 145 °C durchgeführt werden. Alternativ kann die Verarbeitung in so genannten Vakuumsack-, Vakuumring- oder Vakuumlaminatoren z.B. gemäß EP 123568 B1 bei ca. 200 mbar und 130 bis 145 °C durchgeführt werden.

### Messmethoden:

Die Bestimmung des Fließverhaltens der Folie erfolgt als Schmelzindex (Massenfluss: MFR) nach ISO 1133 auf einem entsprechenden Gerät, z.B. der Firma Göttfert, Modell MI2. Der MFR-Wert wird bei den entsprechenden Temperaturen mit der 2 mm Düse bei Gewichtsbelastungen von 21,6 kg, 10 kg oder 2,16 kg in Gramm oder Milligramm pro 10 Minuten (g/10 min) angegeben.

Der Polyvinylalkohol- und Polyvinylalkoholacetataehalt der Polyvinylacetale wurde gemäß ASTM D 1396-92 bestimmt. Der Acetalisierungsgrad (= Butyralgehalt) kann als der zu Hundert fehlende Teil aus der gemäß ASTM D 1396-92 bestimmten Summe aus Polyvinylalkohol- und Polyvinylacetatgehalt berechnet werden. Die Umrechnung von Gew.% in Mol% erfolgt gemäß dem Fachmann bekannten Formeln.

Die Analyse des Metallionenaehaltes erfolgte durch Atomabsorptionsspektroskopie (AAS).

Die Messung der Lösungsviskosität der Polyvinylacetale erfolgte gemäß DIN 53015 bei 20°C in einem Gemisch aus 95 Teilen Ethanol u. 5 Teilen Wasser. Der Feststoffgehalt der Viskositätslösung betrug 5 Gew.%.

Die Messung der Lösungsviskosität der Polyvinylalkohole erfolgte gemäß DIN 53015 bei 20°C in Wasser. Der Feststoffgehalt der Viskositätslösung betrug 4 Gew.%.

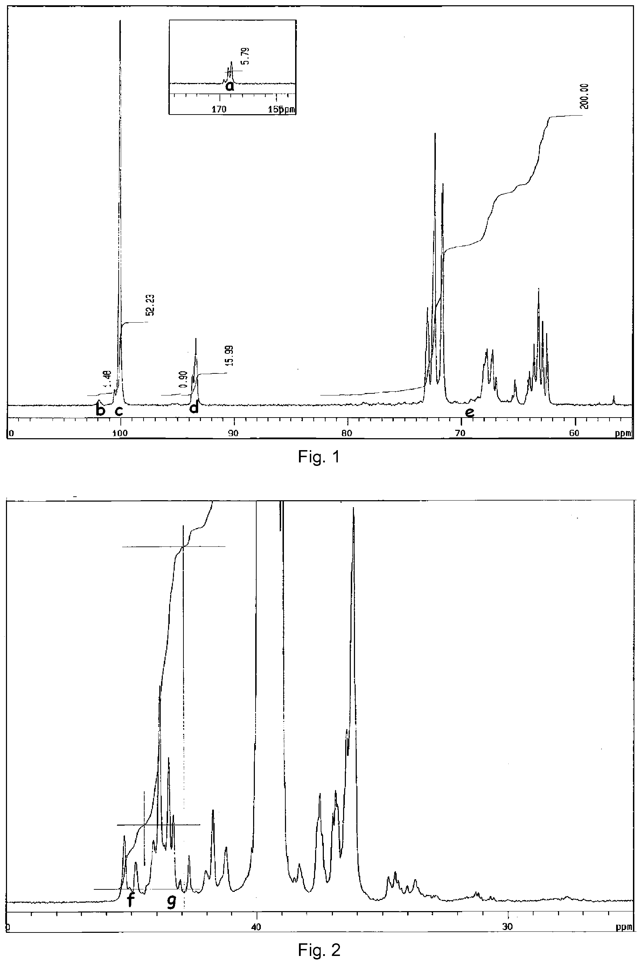

Die ¹³C-NMR-Messungen erfolgten mit einem Spektrometer des Typs LA 500 von JEOL. Es wurden 12 Gew.%ige Lösungen von PVB in deuteriertem Dimethylsulfoxid (DMSO) in NMR-Röhrchen mit einem Durchmesser von 10 mm hergestellt. Chrom (III)-acetylacetonat wurde in einem Anteil von 0,9 Gew.% als Relaxationsmittel zugegeben. Die NMR-Messung erfolgte im NNE-Modus (gated decoupled mode) bei 80°C. Die Zuordnung der Signale ist gemäß Abbildungen 1 u. 2. Die horizontale Achse der Abbildungen ist die chemische Verschiebung in ppm (Resonanzfrequenz DMSO-d6: 39,5 ppm). Die vertikale Achse ist die Intensität der Resonanzen. Der absolute Anteil einer Struktureinheit lässt sich aus den Spektren in der dem Fachmann bekannten Weise durch Integration der entsprechenden Signale ermitteln.

Die Integrationsgrenzen der Resonanzpeaks wie in den Abb. 1 und 2 dargestellt, sind der folgenden Tabelle zu entnehmen.

**Tabelle 1**

| | | **Chemische Verschiebung [ppm]** |
|---|---|---|
| a | Carbonyl C-Atom der Acetyl-Gruppe | 168.5 - 170.5 |
| b | Methin C-Atom des 5-gliedrigen Butyrals-Ringes | 101.6 - 102.4 |
| c | Methin C-Atom des 6-gliedrigen Butyrals-Ringes (meso-Form) | 98.5 - 101.6 |
| d | Methin C-Atom des 6-gliedrigen Butyrals-Ringes (racemo-Form) | 91.5 - 94.5 |
| e | Methin C-Atom der Hauptkette | 60 - 83 |
| f | Methylen C-Atom einer VV-Sequenz | 44.6 - 46 |
| g | Methylen C-Atom von VB - und BB-Sequenz | 42.9 - 44.6 |

Als relatives Maß für die Anteile der verschiedenen Struktureinheiten werden die folgende Berechungsmethoden verwendet:

**Tabelle 2**

| | Berechnungsmethode | |
|---|---|---|
| Butyral Ring meso/racemo | | |
| | meso | c/(c+d) x 100 (%) |
| | racemo | d/(c+d) x 100 (%) |

| HO Blockiness | | |
|---|---|---|
| | VV/(VB + BB) | f/g |

### Beispiele

### Es bedeuten

DOA Dioctyladipat
PVB Polyvinylbutyral mit dem angegebenen PVA-Gehalt

### Vergleichsbeispiel 1:

100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 75 Gewichtsteile n-Butyraldehyd und bei einer Temperatur von 12 °C unter Rühren innerhalb 6 min 75 Gewichtsteile 20 %ige Salzsäure zugegeben, wonach das Polyvinylbutyral (PVB) ausfiel. Die Mischung wurde danach unter Rühren noch 15 min bei 12 °C gehalten, danach innerhalb 80 min auf 60°C erwärmt und bei dieser Temperatur für 30 min gehalten. Das PVB wurde nach Abkühlen auf Raumtemperatur abgetrennt, mit Wasser neutral gewaschen und getrocknet. Es wurde ein PVB mit einem Polyvinylalkoholgehalt von 15,9 Gew.% und einem Polyvinylacetatgehalt von 1,2 Gew.% erhalten.

380 g PVB und 120 g Weichmacher DOA wurden in einem Labormischer (Hersteller: Brabender, Modell 826801) gemischt. Die erhaltene Mischung wurde zu Flachfolie mit einer Dicke von 0,8 mm extrudiert. Die Extrusion erfolgte auf einem Doppelschneckenextruder mit gegenlaufenden Schnecken (Hersteller: Haake, System Rhecord 90), ausgerüstet mit Schmelzepumpe und Breitschlitzdüse. Die Zylindertemperatur des Extruders betrug 220 °C, die Düsentemperatur betrug 150°C.

### Vergleichsbeispiel 2:

Bei der Polymersynthese wurden 66,3 Gewichtsteile n-Butyraldehyd eingesetzt. Die Reaktionsmischung wurde nach Ausfallen des PVBs unter Rühren noch 15 min bei 12 °C gehalten, danach innerhalb 80 min auf 65°C erwärmt und bei dieser Temperatur für 60 min gehalten. Das sonstige Vorgehen war gemäß Vergleichsbeispiel 1.

### Beispiel 1:

Bei der Polymersynthese wurden 63 Gewichtsteile n-Butyraldehyd eingesetzt. Die Reaktionsmischung wurde nach Ausfallen des PVBs unter Rühren noch 15 min bei 12 °C gehalten, danach innerhalb 80 min auf 69°C erwärmt und bei dieser Temperatur für 120 min gehalten. Das sonstige Vorgehen war gemäß Vergleichsbeispiel 1.

### Beispiel 2:

Die Reaktionsmischung wurde nach Ausfallen des PVBs unter Rühren noch 15 min bei 12 °C gehalten, danach innerhalb 80 min auf 73°C erwärmt und bei dieser Temperatur für 120 min gehalten. Das sonstige Vorgehen war gemäß Beispiel 1.

### Beispiel 3:

Bei der Polymersynthese wurden 65,1 Gewichtsteile n-Butyraldehyd eingesetzt. Das sonstige Vorgehen war gemäß Beispiel 1.

### Beispiel 4:

Bei der Polymersynthese wurden bei einer Temperatur von 40 °C 63,9 Gewichtsteile n-Butyraldehyd und bei einer Temperatur von 12 °C unter Rühren innerhalb 6 min 72,9 Gewichtsteile 30 %ige Salpetersäure zugegeben, wonach das Polyvinylbutyral (PVB) ausfiel. Das sonstige Vorgehen war gemäß Beispiel 1.

### Auswertung

Die Eigenschaften der erfindungsgemäßen Polyvinylacetale bzw. hiermit hergestellter Folien sind in der nachfolgenden Tabelle dargestellt.

Es zeigt sich, das Mischungen von erfindungsgemäßen Polyvinylacetalen mit einem Weichmacher eine deutlich verbesserte Fliessfähigkeit besitzen, erkennbar an den gegenüber den Vergleichsbespielen deutlich erhöhten Schmelzindices.

Diese Eigenschaft ist bei der Weiterverarbeitung von Folien von Vorteil. Hierzu wurden je zwei Folien in einem Testaufbau mit zwei Glasscheiben und mehreren zwischen die Folien gelegten Drähten von 0,2 mm Durchmesser in einem üblichen Autoklavenprozess bei einer Temperatur von 130° und einem Druck von 10 bar über eine Stunde laminiert.

Es zeigte sich das die mit erfindungsgemäßen Polyvinylacetalen hergestellten Folien die Drähte ohne Blasenbildung umschlossen. Die Folien gemäß den Vergleichsbeispielen benötigten hierzu eine höhere Verarbeitungstemperatur von 140° C oder eine längere Prozessdauer von 1,5 h.

**Tabelle 3**

| | **VB 1** | **VB 2** | **B 1** | **B 2** | **B 3** | **B 4** |
|---|---|---|---|---|---|---|
| PVB-Eigenschaften | | | | | | |
| Endtemperatur [°C] | 60 | 65 | 69 | 73 | 69 | 69 |
| Haltezeit bei Endtemperatur [min] | 30 | 60 | 120 | 120 | 120 | 120 |
| Polyvinylalkoholgehalt PVB [w%] | 15,9 | 16,2 | 16,4 | 16,2 | 15,4 | 14,7 |
| Polyvinylacetatgehalt PVB [w%] | 1,2 | 1,6 | 1,3 | 1,3 | 1,5 | 1,5 |
| Acetalisierungsgrad [w%] | 82,8 | 82,2 | 82,4 | 82,5 | 83,1 | 83,8 |
| Acetalisierungsgrad [mol%] | 75,6 | 75 | 75 | 75,2 | 76,1 | 77,1 |
| meso (13 C-NMR) [%] | 71,5 | 72 | 72,7 | 72,8 | 71,7 | 72,5 |
| racemo (13 C-NMR) [%] | 28,5 | 28 | 27,3 | 27,2 | 28,3 | 27,5 |
| meso/racemo | 2,5 | 2,6 | 2,7 | 2,7 | 2,5 | 2,6 |
| OH Blockiness VV/(BV+BB) (13C-NMR) | 0,129 1 | 0,150 9 | 0,176 9 | 0,180 9 | 0,162 1 | 0,157 9 |

| | VB 1 | VB 2 | B 1 | B 2 | B3 | B 4 |
|---|---|---|---|---|---|---|
| Viskosität PVB, 5% Lsg. In Ethanol [mPas] | 105 | 77,8 | 70 | 68,5 | 68,8 | 68,2 |

| Folieneigenschaften | | | | | | |
|---|---|---|---|---|---|---|
| DOA-Gehalt [w%] | 24 | 24 | 24 | 24 | 24 | 24 |
| MFR 100/2mm/21,6kg [mg/10min] | 294 | 426 | 554 | 552 | 611 | 713 |
| MFR 120/2mm/10kg [mg/10min] | 254 | 382 | 463 | 439 | 514 | 584 |
| MFR 130/2mm/10kg [mg/10min] | 524 | 834 | 886 | 1026 | 848 | 1125 |
| MFR 190/2mm/2,16kg [g/10min] | 0,62 | 1,06 | 1,55 | 1,56 | 1,5 | 1,84 |

## Patentansprüche

1. Polyvinylacetale erhältlich durch Reaktion von Polyvinylalkohol mit mindestens einem Aldehyd zu einem Acetalisierungsgrad von mindestens 75 Mol.%, **gekennzeichnet durch** eine OH-Blockiness des Polyvinylacetals ermittelt durch 13C-NMR Messung definiert als Quotient aus der Anzahl der Methylengruppen von zwei benachbarten Alkoholsequenzen (VV) und der Summe der Anzahl der Methylengruppen aus benachbarten Alkohol/Acetalsequenzen und Acetal/Acetalsequenzen (VB + BB) von mehr als 0,151.

2. Polyvinylacetal nach Anspruch 1, **gekennzeichnet durch** eine Lösungsviskosität in einer 5 Gew.% Lösung in Ethanol von weniger als 75 mPas.

3. Polyvinylacetal nach Anspruch 1 oder 2, **dadurch gekennzeichnet, dass** zur Acetalisierung des Polyvinylalkohols Butyraldehyd verwendet wird.

4. Polyvinylacetale nach einem der Ansprüche 1 bis 3, **gekennzeichnet, durch** einen Restacetatgehalt von 1,0 bis 8 Mol%.

5. Verfahren zur Herstellung eines Polyvinylacetals nach Anspruch 1 durch säurekatalysierte Reaktion von mindestens einem Polyvinylalkohol mit mindestens einem Aldehyd, **gekennzeichnet durch** die Verfahrensschritte
a) Umsetzen des Polyvinylalkohols mit dem Aldehyd bei einer Temperatur von 0 bis 20 °C
b) Vervollständigen der Reaktion aus a) durch Erwärmen der Reaktionsmischung auf 68 bis 90 °C,
c) Abkühlen der Reaktionsmischung auf 15 bis 25 °C und Abtrennen des Polyvinylacetals
d) Neutralisation des von der Reaktionsmischung abgetrennten Polyvinylacetals.

6. Verfahren nach Anspruch 5, **dadurch gekennzeichnet, dass** die Temperatur im Verfahrensschritt b) über einen Zeitraum von mindestens 60 min. gehalten wird.

7. Verfahren nach Anspruch 5 oder 6, **dadurch gekennzeichnet, dass** die Temperatur in Verfahrensschritt b) 68 °C bis 80 °C beträgt.

8. Verfahren nach einem der Ansprüche 5 bis 7, **gekennzeichnet durch** die Abwesenheit von Emulgatoren oder Tesiden.

9. Verwendung der Polyvinylacetale nach einem der Ansprüche 1 bis 5 zur Herstellung von weichmacherhaltigen Folien für Verbundverglasungen oder Photovoltaikmodulen.

## Claims

1. Polyvinyl acetals obtainable by the reaction of polyvinyl alcohol with at least one aldehyde to a degree of acetalization of at least 75 mol %, **characterized by** an OH blockiness of the polyvinyl acetal determined by ¹³C NMR measurement, defined as the ratio of the number of methylene groups of two adjacent alcohol sequences (VV) and the sum of the number of methylene groups of adjacent alcohol/acetal sequences and acetal/acetal sequences (VB + BB) of more than 0.151.

2. Polyvinyl acetal as claimed in claim 1, **characterized by** a solution viscosity in a 5 % by weight solution in ethanol of less than 75 mPas.

3. Polyvinyl acetal as claimed in claim 1 or claim 2, **characterized in that** butyraldehyde is used for the acetalization of the polyvinyl alcohol.

4. Polyvinyl acetals as claimed in one of claims 1 to 3, **characterized by** a residual acetate content of 1.0 mol % to 8 mol %.

5. A method for the production of a polyvinyl acetal as claimed in claim 1 by acid-catalysed reaction of at least one polyvinyl alcohol with at least one aldehyde, **characterized by** the following steps of the method:
a) reaction of the polyvinyl alcohol with the aldehyde at a temperature or 0 to 20 °C,
b) completion of the reaction from a) by heating the reaction mixture to 68 to 90 °C,
c) cooling the reaction mixture to 15 to 25 °C and separating out the polyvinyl acetal,
d) neutralization of the polyvinyl acetal separated from the reaction mixture.

6. The method as claimed in claim 5, **characterized in that** the temperature in step b) of the method is maintained over a time interval of at least 60 min.

7. The method as claimed in claim 5 or claim 6, **characterized in that** the temperature in step b) of the method is 68 °C to 80 °C.

8. The method as claimed in one of claims 5 to 7, **characterized by** the absence of emulsifiers or surfactants.

9. Use of the polyvinyl acetals as claimed in one of claims 1 to 5 for the production of plasticizer-containing films for laminated glazing or for photovoltaic modules.

## Revendications

1. Acétals de polyvinyle pouvant être obtenus par réaction d'alcool polyvinylique avec au moins un aldéhyde pour ainsi atteindre un degré d'acétalisation d'au moins 75 % en moles, **caractérisés en ce que** lesdits acétals de polyvinyle présentent un taux de blocage OH, défini comme quotient entre le nombre de groupes méthylène appartenant à deux séquences d'alcools voisins (VV) et la somme du nombre de groupes méthylène issus de séquences d'alcool/acétal et d'acétal/acétal (VB + BB), qui est supérieur à 0,151, sa détermination étant réalisée par mesure en 13C-NMR.

2. Acétal de polyvinyle selon la revendication 1, **caractérisé en ce que** sa viscosité en solution, dans une solution éthanolique à 5 % en poids, est inférieure à 75 mPas.

3. Acétal de polyvinyle selon les revendications 1 ou 2, **caractérisé en ce que** l'on utilise du butyraldéhyde pour acétaliser ledit alcool polyvinylique.

4. Acétals de polyvinyle selon l'une des revendications 1 à 3, **caractérisés par** une teneur résiduelle en acétate comprise entre 1,0 et 8 % en moles.

5. Procédé de préparation d'un acétal de polyvinyle selon la revendication 1 consistant à faire réagir, par catalyse acide, au moins un alcool polyvinylique avec au moins un aldéhyde, **caractérisé par** les étapes de procédé suivantes
a) faire réagir ledit alcool polyvinylique avec ledit aldéhyde à une température comprise entre 0 et 20 °C
b) amener la réaction de a) jusqu'à son terme, en chauffant le mélange réactionnel à 68 à 90 °C,
c) refroidir le mélange réactionnel à 15 à 25 °C et en isoler ledit acétal de polyvinyle
d) neutraliser ledit acétal de polyvinyle après son isolation à partir du mélange réactionnel.

6. Procédé selon la revendication 5, **caractérisé en ce qu'**à l'étape b), on maintient la température pendant une période d'au moins 60 min.

7. Procédé selon les revendications 5 ou 6, **caractérisé en ce qu'**à l'étape b), la température est comprise entre 68 °C et 80 °C.

8. Procédé selon l'une des revendications 5 à 7, **caractérisé par** l'absence d'émulsifiants ou d'agents tensioactifs.

9. Utilisation des acétals de polyvinyle selon l'une des revendications 1 à 5 pour fabriquer des feuilles contenant des plastifiants, destinées à des vitrages feuilletés ou des modules photovoltaïques.
